# FASCICULE DE BREVET EUROPEEN

(11) **EP 0 683 273 B1**
(45) Date de publication et mention de la délivrance du brevet: **29.07.1998**
(21) Numéro de dépôt: 95401115.1
(22) Date de dépôt: 12.05.1995
(51) Int. Cl.: E02D 29/02, E02D 17/18, B09B 1/00

(54) **Remblai allégé utilisant des matériaux recyclés**
Leichte Aufschüttung hergestellt aus wiederverwertbaren Materialien
Light-weight embankment made of recycled materials

(30) Priorité: 20.05.1994 FR 9406200
(43) Date de publication de la demande: 22.11.1995
(73) Titulaire: SCREG, F-78065 St Quentin-En-Yvelines (FR)
(72) Inventeur: Tessonneau, Hervé, F-69570 Dardilly (FR)
(74) Mandataire: Jacobson, Claude

(56) Documents cités:
- EP-A- 0 371 898
- DE-A- 2 415 023
- US-A- 1 935 090
- PATENT ABSTRACTS OF JAPAN vol. 14, no. 407 (M-1019) (4350) 4 Septembre 1990 & JP-A-02 157 319 (TOYOBO CO. LTD.) 18 Juin 1990
- PATENT ABSTRACTS OF JAPAN vol. 12, no. 45 (M-667) (2892) 10 Février 1988 & JP-A-62 197 521 (DOW KAKO K.K.) 1 Septembre 1987

## Description

La présente invention est relative à un remblai allégé utilisant des matériaux recyclés.

Les remblais routiers traditionnels sont réalisés à partir de matériaux d'excavation, dont la masse volumique est voisine de 2000 kg/m³.

Dans certains cas, pour des problèmes spécifiques (sols compressibles, pentes instables, etc...), il est intéressant d'avoir recours à des matériaux plus légers.

C'est pourquoi de nombreux remblais ont été réalisés ces dernières années avec des matériaux extrêmement légers de masse volumique typiquement comprise entre 20 et 60 kg/m³ environ, du type polystyrène expansé ou nid d'abeille en polypropylène, ou encore nid d'abeille en PVC (chlorure de polyvinyle). Cependant, ces matériaux nobles, issus de l'industrie chimique, sont très coûteux et limitent l'emploi de la technique, alors qu'il n'est pas toujours nécessaire de recourir à des matériaux aussi légers.

On a par ailleurs proposé (EP-A-371 898) de réaliser des remblais au moyen de blocs de déchets de matière plastique compactés et contraints sous charge. L'inconvénient de cette technique réside dans la masse volumique souvent trop élevée des blocs ainsi obtenus, laquelle se situe au-dessus de 200 kg/m³.

L'invention a pour but de fournir des remblais légers et économiques permettant un réglage de la masse volumique moyenne dans une gamme étendue de valeurs.

A cet effet, l'invention a pour objet un remblai allégé suivant la revendication 1.

Le remblai suivant l'invention peut comporter une ou plusieurs des caractéristiques des revendications 2 à 10.

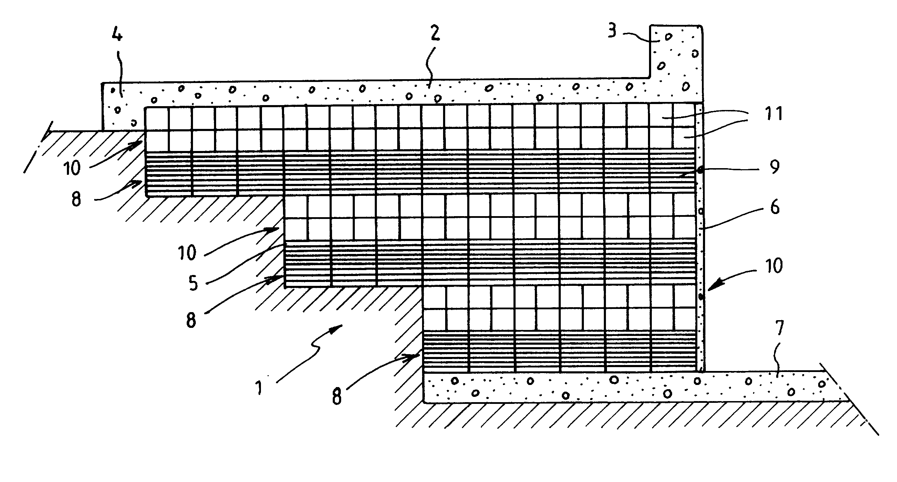

Un exemple de réalisation de l'invention va maintenant être décrit en regard du dessin annexé, dont la Figure unique représente schématiquement, en coupe transversale, un remblai routier conforme à l'invention.

Le remblai 1 représenté au dessin est destiné à supporter une voie de chaussée constituée de dalles 2 en béton armé, pourvues chacune d'une longrine de rive 3 en saillie vers le haut et d'une longrine arrière 4 en saillie vers le bas. Le remblai est délimité d'une part par une excavation en gradins 5, d'autre part par un bardage vertical 6 en béton projeté, situé au droit de la longrine 3. La couche inférieure du remblai est posée sur une couche drainante 7.

Le remblai 1 est constitué de couches alternées de deux types différents :
- Des premières couches 8 constituées chacune d'une ou plusieurs nappes de blocs parallélépipédiques 9 en polystyrène expansé, par exemple ceux commercialisés sous la marque déposée COMPOSTYRENE. En variante, on peut utiliser des blocs 9 en nid d'abeille en matière plastique, notamment en polypropylène.
- Des secondes couches 10 constituées chacune d'une ou plusieurs nappes de blocs parallélépipédiques 11 de déchets de matière plastique compactés et maintenus en forme après compactage. Ces blocs 11 peuvent être réalisés suivant la technique décrite dans le EP-A-371 898 précité, ou bien, en variante, en compactant dans une presse les déchets, éventuellement mélangés à une matière additionnelle thermofusible, et en les faisant traverser par une série de pointes chauffées à une température suffisante pour assurer la thermofusion des blocs le long d'autant de canaux.

Les couches 8 ont une masse volumique très faible, de l'ordre de 20 à 60 kg/m³, tandis que les couches 10 ont une masse volumique nettement supérieure mais très inférieure à celle des remblais traditionnels, comprise typiquement entre 200 et 600 kg/m³. On comprend donc qu'en choisissant, pour chacune des couches 8 et 9, un nombre plus ou moins grand de nappes de blocs parallélépipédiques 9 ou 11, on peut régler la masse volumique moyenne du remblai à pratiquement n'importe quelle valeur comprise entre celles des blocs 9 et celles des blocs 11.

## Revendications

1. Remblai allégé utilisant des matériaux recyclés, comprenant d'une part des premiers blocs parallélépipédiques (9) en matière plastique ayant une première masse volumique très faible, et d'autre part des seconds blocs parallélépipédiques (11) à base de déchets recyclés, notamment compactés, ayant une seconde masse volumique nettement supérieure à la première masse volumique, mais très inférieure à celle des remblais traditionnels réalisés à partir de matériaux d'excavation, dont la masse volumique est voisine de 2000 kg/m³.

2. Remblai suivant la revendication 1, caractérisé en ce qu'il est constitué, au moins en partie, de couches successives alternées (8, 10), à savoir d'au moins une couche légère (8) qui comprend au moins une nappe desdits premiers blocs (9), et d'au moins une couche dense (10) qui comprend au moins une nappe desdits seconds blocs (11).

3. Remblai suivant la revendication 1 ou 2, caractérisé en ce que ladite première masse volumique est nettement inférieure à 100 kg/m³, tandis que ladite seconde masse volumique est nettement supérieure à 100 kg/m³ et nettement inférieure à 1000 kg/m³.

4. Remblai suivant la revendication 3, caractérisé en ce que ladite première masse volumique est comprise entre 20 et 60 kg/m³ environ, tandis que la seconde masse volumique est comprise entre 200 et 600 kg/m³ environ.

5. Remblai suivant l'une quelconque des revendications 1 à 4, caractérisé en ce que lesdits premiers blocs (9) sont constitués de polystyrène expansé.

6. Remblai suivant l'une quelconque des revendications 1 à 4, caractérisé en ce que lesdits premiers blocs (9) sont constitués d'une structure en nid d'abeille en matière plastique, notamment en polypropylène ou en chlorure de polyvinyle.

7. Remblai suivant l'une quelconque des revendications 1 à 6, caractérisé en ce que lesdits seconds blocs (11) sont réalisés à partir de déchets recyclés, compactés et contraints sous charge.

8. Remblai suivant la revendication 7, caractérisé en ce que les déchets sont des fragments de matière plastique.

9. Remblai suivant la revendication 7 ou 8, caractérisé en ce que les déchets sont contraints sous charge par un moyen de contention périphérique tel que des ligatures et/ou une housse.

10. Remblai suivant l'une quelconque des revendications 1 à 6, caractérisé en ce que lesdits seconds blocs (11) sont réalisés à partir de déchets de matière plastique compactés, transpercés et thermosoudés entre eux à l'emplacement des perçages.

## Patentansprüche

1. Aufschüttung mit reduziertem Gewicht, für die wiederverwendbare Materialien verwendet werden und die umfaßt: einerseits erste parallelepipedische Blöcke (9) aus Kunststoffmaterial mit einer ersten, sehr geringen Dichte und andererseits zweite parallelepipedische Blöcke (11) auf Basis wiederverwendeter, insbesondere verfestigter Abfälle mit einer zweiten Dichte, die deutlich höher als die erste Dichte, jedoch viel geringer als jene der herkömmlichen Aufschüttungen ist, welche anhand von Aushubmaterialien verwirklicht werden, deren Dichte in der Nähe von 2000 kg/m³ liegt.

2. Aufschüttung nach Anspruch 1, dadurch gekennzeichnet, daß sie wenigstens zum Teil aus abwechselnd aufeinanderfolgenden Schichten (8, 10) gebildet ist, d. h. aus wenigstens einer leichten Schicht (8), die wenigstens eine Schicht aus den ersten Blöcken (9) enthält, und aus wenigstens einer dichten Schicht (10), die wenigstens eine Schicht aus den zweiten Blöcken (11) enthält.

3. Aufschüttung nach Anspruch 1 oder 2, dadurch gekennzeichnet, daß die erste Dichte deutlich niedriger als 100 kg/m³ ist, während die zweite Dichte deutlich höher als 100 kg/m³ und deutlich niedriger als 1000 kg/m³ ist.

4. Aufschüttung nach Anspruch 3, dadurch gekennzeichnet, daß die erste Dichte im Bereich von ungefähr 20 bis 60 kg/m³ liegt, während die zweite Dichte im Bereich von ungefähr 200 bis 600 kg/m³ liegt.

5. Aufschüttung nach irgendeinem der Ansprüche 1 bis 4, dadurch gekennzeichnet, daß die ersten Blöcke (9) aus expandiertem Polystyrol gebildet sind.

6. Aufschüttung nach irgendeinem der Ansprüche 1 bis 4, dadurch gekennzeichnet, daß die ersten Blöcke (9) aus einer Kunststoff-Bienenwabenstruktur, insbesondere aus Polypropylen oder aus Polyvinylchlorid, gebildet sind.

7. Aufschüttung nach irgendeinem der Ansprüche 1 bis 6, dadurch gekennzeichnet, daß die zweiten Blöcke (11) aus wiederverwendeten Abfällen gebildet sind, die verfestigt und unter Last eingespannt sind.

8. Aufschüttung nach Anspruch 7, dadurch gekennzeichnet, daß die Abfälle Kunststoff-Bruchstücke sind.

9. Aufschüttung nach Anspruch 7 oder 8, dadurch gekennzeichnet, daß die Abfälle durch ein Umfangseinspannmittel wie etwa Bindedraht und/oder einen Überzug unter Last eingespannt sind.

10. Aufschüttung nach irgendeinem der Ansprüche 1 bis 6, dadurch gekennzeichnet, daß die zweiten Blöcke (11) anhand von Kunststoffabfällen verwirklicht sind, die verfestigt, durchlöchert und am Ort der Lochungen miteinander thermoverschweißt sind.

## Claims

1. Lightweight embankment using recycled materials comprising on the one hand first parallelepiped-shaped blocks (9) of plastics material having a first very low density and on the other hand second parallelepiped-shaped blocks (11) based on recycled refuse, in particular compacted, having a second density significantly greater than the first density but very much less than that of traditional embankments made using excavated material, of which the density is in the neighbourhood of 2,000 kg/m³.

2. Embankment according to claim 1, characterised in that it is constituted at least in part by successive alternate beds (8, 10), namely of at least one lightweight bed (8) which comprises at least one layer of the said first blocks (9), and of at least one dense bed (10) which comprises at least one layer of the said second blocks (11).

3. Embankment according to claim 1 or 2, characterised in that the said first density is significantly less than 100 kg/m³, whereas the said second density is significantly greater than 100 kg/m³ and significantly less than 1,000 kg/m³.

4. Embankment according to claim 3, characterised in that the said first density lies between around 20 and 60 kg/m³, whereas the second density is between around 200 and 600 kg/m³.

5. Embankment according to any one of claims 1 to 4, characterised in that the said first blocks (9) are constituted by expanded polystyrene.

6. Embankment according to any one of claims 1 to 4, characterised in that the said first blocks (9) are constituted by a honeycomb structure of plastics material, in particular polypropylene or polyvinyl chloride.

7. Embankment according to any one of claims 1 to 6, characterised in that the said second blocks (11) are derived from recycled refuse, compacted and constrained under load.

8. Embankment according to claim 7, characterised in that the refuse is fragments of plastics material.

9. Embankment according to claim 7 or 8, characterised in that the refuse is constrained under load by means of peripheral enclosure such as ligatures and/or a casing.

10. Embankment according to any one of claims 1 to 6, characterised in that the said second blocks (11) are made from refuse of plastics material compacted, pierced and thermally welded together at the point of piercing.
